# EUROPÄISCHE PATENTSCHRIFT

(11) **EP 1 835 786 B1**
(45) Veröffentlichungstag und Bekanntmachung des Hinweises auf die Patenterteilung: **01.07.2009**
(21) Anmeldenummer: 06003792.6
(22) Anmeldetag: 24.02.2006
(51) Int. Cl.: H05B 3/34, H05B 3/58, B60N 2/56

(54) **Flächenheizelement und Verfahren zur Herstellung eines Flächenheizelementes**
Planar heating element and process for manufacturing a planar heating element
Elément chauffant pour surface et procédé de fabrication d'un élément chauffant pour surface

(43) Veröffentlichungstag der Anmeldung: 19.09.2007
(73) Patentinhaber: Sefar AG, 8803 Rüschlikon (CH)
(72) Erfinder: Maurer, Christoph, 8044 Zürich (CH); Katzenbach, Peter, 9410 Heiden (CH); Strotz, Marcel, 8854 Siebnen (CH)
(74) Vertreter: Wunderlich, Rainer

(56) Entgegenhaltungen:
- WO-A-98/09478
- WO-A-20/04016045
- DE-C- 847 784
- DE-U1- 20 311 150
- GB-A- 840 243
- GB-A- 1 020 911
- US-A- 5 484 983

## Beschreibung

Die Erfindung betrifft ein Flächenheizelement gemäß dem Oberbegriff des Anspruchs 1. Ein derartiges Flächenheizelement weist ein Gewebe mit Fäden in Schuss- und Kettrichtung auf, bei dem mindestens ein Teil der Fäden als elektrisch leitende Fäden ausgeführt ist.

Ferner betrifft die Erfindung ein Verfahren zur Herstellung eines Flächenelements gemäß dem Oberbegriff des Anspruchs 9, bei dem ein Gewebe aus Fäden gewebt wird, welche zumindest zum Teil elektrisch leitende Fäden sind.

Flächenheizelemente werden beispielsweise für Sitzheizungen in KFZs eingesetzt. Dazu werden auf einem Textil meist Drahtbündel, so genannte Litzendrähte, aufgestickt. Diese Litzendrähte verlaufen spiralenförmig bzw. spulenförmig auf dem Trägermaterial und bestehen meistens nur aus einem durchgehenden Leiter, der dann über die gesamte Fläche des Trägermaterials angeordnet wird. Zur Wärmeerzeugung wird an die Enden des Leiters eine Spannung angelegt. Durch den Widerstand des Litzendrahtes und des durch ihn fließenden Stromes wird Wärme erzeugt, die zur Beheizung des Sitzes genutzt wird. Das Aufsticken des Drahtes ist zum einen arbeitsaufwändig, zum anderen ist es äußerst schwierig eine gleichmäßige Wärmewirkung über die gesamte Fläche des Trägermaterials zu erzielen.

Problematisch bei der Verwendung von Litzendrähten ist auch, dass es an manchen Stellen des resultierenden Flächenheizelementes zu Überhitzungen kommen kann. Dies ist meist auf zu nah aneinander verlegte Drahtbündel zurückzuführen. Es tritt zum Teil auch deswegen auf, da die aufgestickten Litzendrähte dazu neigen zu verrutschen und so die Abstände und die exakte Position des Litzendrahtes zu dem benachbarten Draht nicht exakt konstant gehalten werden kann.

Ferner weist das Trägermaterial mit den aufgestickten Drahtbündeln eine geringe Flexibilität auf, da die Drähte einen relativ großen Durchmesser besitzen. So ist ein Verlegen in oder auf der Polsterung von Sitzen äußerst schwierig. Außerdem wird meist auf dem Trägermaterial eine elektrische Isolationsschicht vorgesehen, um Kurzschlüsse oder andere Abflüsse des Heizstroms zu verhindern. Durch diese Isolationsschicht wird die Flexibilität weiter verschlechtert.

Eine andere Möglichkeit zur Herstellung einer Sitzheizung wird beispielsweise in DE 42 33 118 A1 beschrieben. Hierbei wird ein Gewebe als Heizmatte verwendet, welches aus Kohlenstofffasern besteht, die einen relativ hohen elektrischen Widerstand aufweisen. Um diese Heizmatte mit Strom zu versorgen, sind an den Enden jeweils Zuleitungs- beziehungsweise Kontaktdrähte vorgesehen. Einer der Kontaktdrähte wird geerdet, wohingegen ein anderer mit Spannung beaufschlagt wird. Durch die Potentialdifferenz fließt ein Strom über die Kohlenstofffasern des Gewebes zu dem geerdeten Kontaktdraht und erzeugt hierbei Wärme.

Eine derartige Heizmatte ermöglicht theoretisch eine gleichmäßig konstante Wärmeabgabe über die gesamte Fläche. Eine Konzentration der Wärmeentwicklung an bestimmten Stellen ist aber mit dieser Heizmatte nicht möglich. Auch besteht das Problem, dass die Anforderung an das Kohlenstofffasergewebe in Bezug auf die Gleichmäßigkeit sehr hoch ist, um eine wirklich gleichmäßige Wärmeverteilung zu erreichen.

Ein anderes Heizelement und ein Verfahren zu dessen Herstellung ist aus GB-A-1 020 911 bekannt. Hierbei werden parallele Streifen aus elektrisch leitendem Material, die einem gewünschten Widerstand aufweisen, auf ein Grundmaterial aufgebracht. Anschließend wird ein zweites Grundmaterial auf das erste aufgebracht, so dass sich die elektrisch leitenden Materialien dazwischen befinden. Durch zwei als Rollen ausgeführte Elektroden werden anschließend die zwei Basismaterialien miteinander verschweißt, so dass die Streifen aus elektrisch leitendem Material nicht verrutschen können.

Ein anderes Flächenheizelement ist in DE 41 36 425 A1 offenbart. Hierbei sind in einem gewirkten textilen Grundmaterial sinusförmige Schussfäden vorgesehen, die als Heizleiter fungieren. Zur Stromzuführung an diese Heizleiter sind Stromzuführungsleiter vorgesehen, an welche die Heizleiter jeweils geführt werden. Wie beschrieben, muss ein besonderes Augenmerk auf die Kontaktierung der Heizleiter mit den Stromzuführungsleitern gelegt werden. Dies wird durch eine lange Kontaktstrecke zu erreichen versucht. Auf eine mechanische Verbindung des Heizleiters mit den Stromzuführungsleitern wird bewusst verzichtet.

Aus DE 847 784 C ist eine elektrisch beheizbare Decke bekannt. Hierbei sind elektrische nicht leitende Fäden mit elektrisch leitenden Fäden zu einem Gewebe verwebt. Die elektrisch leitenden Fäden sind im Wesentlichen parallel angeordnet, wobei einzelne Gruppen dieser Fäden durch senkrecht zu den elektrisch leitenden Fäden verlaufende Leiter verbunden sind. Die Verbindung findet bevorzugt durch Hohlnieten statt.

Weitere Heizelemente sind aus der US-A-5484983 und GB 840243 A bekannt. Hierbei werden wieder elektrisch leitende Fäden mit nicht elektrisch leitenden Fäden zu einem Gewebe verwebt. Die Kontaktierung der elektrisch leitenden Fäden untereinander findet dadurch statt, dass sowohl Kett- als auch Schussfäden elektrisch leitend sind, so dass ein Leitungsnetzwerk bei der Fabrikation der Gewebe entsteht.

In der DE 203 11 150 U1 ist ein Infusionswärmer beschrieben. Dieser weist eine textile Struktur auf, bei der sich elektrisch leitende Textilbereiche mit elektrisch nicht leitenden textilen Bereichen abwechseln. Als elektrisch leitende Bereiche können hierbei beispielsweise Bänder, Litzen oder Schläuche verwendet werden.

In der WO 2004/016045 A1 ist ein Verfahren beschrieben, um unterschiedliche Heizflächen von Flächenheizelementen zu betreiben. Die Heizflächen sind durch parallel liegende elektrisch leitende Drähte ausgebildet. Ferner ist eine Schaltung vorgesehen, um zeitabhängig verschiedene Bereiche der elektrisch leitenden Fäden mit Energie zu versorgen und somit die Heizwirkung zu beeinflussen.

Der Erfindung liegt die **Aufgabe** zugrunde, ein Flächenheizelement und ein Verfahren zur Herstellung eines Flächenheizelementes anzugeben, welches besonders effizient, flexibel dimensionierbar und einsetzbar ist.

Die Aufgabe wird durch ein Flächenheizelement mit den Merkmalen des Anspruchs 1 und einem Verfahren zur Herstellung eines Flächenheizelements mit den Merkmalen des Anspruchs 9 gelöst.

Bevorzugte Ausführungsformen sind in den abhängigen Ansprüchen, in der Beschreibung und in den Figuren mit deren Erläuterungen angegeben.

Ein erfindungsgemäßes Flächenheizelement ist dadurch gekennzeichnet, dass mindestens zwei Heizbänder vorgesehen sind, welche jeweils aus einer Gruppe von zueinander beabstandet laufenden elektrisch leitenden Fäden zusammengefasst sind. Weiter ist vorgesehen, dass die elektrisch leitenden Fäden jeder Gruppe in einem Anfangs- und einem Endbereich durch eine flächige Verbindungseinrichtung elektrisch verbunden sind und dass die Heizbänder über Verbindungseinrichtungen miteinander elektrisch verschaltet sind.

Ein Grundgedanke der Erfindung besteht darin, mehreren einzelnen, elektrisch leitenden Fäden als Heizbänder zusammenzufassen und diese so gemeinsam anzusprechen. Durch das Zusammenfassen mehrerer zueinander beabstandet verlaufender benachbarter elektrisch leitender Fäden bietet sich zum einen der Vorteil, dass, sollte es zu einer Unterbrechung eines Fadens kommen, es nicht zu einer kompletten Unterbrechung des Stromkreises führt. Dies tritt bei herkömmlichen Sitzheizungen mit einer spiralförmig ausgelegten Litze auf, sobald die Litze an einer Stelle unterbrochen ist. Zum anderen wird es ermöglicht, dass es selbst beim Ausfall von einigen elektrisch leitenden Fäden eines Heizbandes noch zu einer ausreichenden Wärmeentwicklung kommt. So ist es für die Wärmewirkung vernachlässigbar ob einer von beispielsweise sechsunddreißig leitenden Fäden eines Heizbandes ausfällt.

Ein weiterer Vorteil, der sich durch das Einsetzen von Heizbändern ergibt ist, dass weitaus dünnere Einzeldrähte verwendet werden können. Wie bekannt steigt der Widerstand eines Leiters mit der Abnahme seines Durchmessers an. Demnach ergibt sich bei der Verwendung von sehr feinen elektrisch leitenden Fäden das Problem, dass selbst bei niedriger Spannung der Widerstand derart groß wird, dass es leicht zu einer Überhitzung und schließlich zum Durchschmelzen eines derartigen Leiters bzw. Fadens kommen kann. Die Verwendung von sehr dünnen Fäden als Leiter ist aber für ein sehr flexibles Flächenheizelement von Vorteil, da bei dickeren Leitern die gesamte Flexibilität des entstehenden Gewebes deutlich verringert wird. Werden aber mehrere dünne Leiter parallel zu einem Heizband zusammengefasst, so sinkt der absolute Widerstand eines derartigen Heizbandes, so dass das resultierende Heizband einen geringeren Widerstand als die einzelnen leitenden Drähte hat. Somit wird aufgrund des geringeren Widerstandes auch weniger Wärme produziert. Hierdurch wird die Gefahr des Durchschmelzens von Leitern in einem großen Maße verringert.

Da sich bei einer großen Anzahl von Leitern in einem Heizband beispielsweise in der Größenordnung von vierzig, der Ausfall von einem oder zwei Leitern nicht erheblich auf den Widerstand des Heizbandes auswirkt, wird durch eine derartige Konstruktion auch eine geringe Fehleranfälligkeit in Bezug auf eine Änderung des Gesamtwiderstandes ermöglicht.

Ein weiterer Grundgedanke des erfindungsgemäßen Flächenheizelements ist es, die elektrisch leitenden Fäden jeder Gruppe in einen Anfangs- und einem Endbereich durch flächige Verbindungseinrichtungen elektrisch zu verbinden. Diese Verbindungseinrichtungen können auch zu einer mechanischen Verbindung dienen. Durch die Verbindungseinrichtungen, die auf das Gewebe aufgebracht werden, wird die Kontaktierung der einzelnen leitenden Fäden eines Heizbandes deutlich vereinfacht zuverlässiger ausgeführt als durch im Gewebe eingebrachte Zuleitungen.

Ein anderer Grundgedanke, der durch das erfindungsgemäße Flächenheizelement realisiert ist, ist die Möglichkeit verschiedene Heizbänder unterschiedlich durch die flächigen Verbindungseinrichtungen zu verschalten. So ist es beispielsweise möglich, mehrere Heizbänder parallel zueinander zu verschalten, um eine erhöhte Ausfallsicherheit zu erreichen. Auch kann hierdurch der Widerstand und damit die Wärmeentwicklung des resultierenden Flächenheizelementes bestimmt werden. Werden beispielsweise mehrere Heizbänder in Serie hintereinander geschaltet, so erhöht sich der Widerstand und die gesamte Heizwirkung wird erhöht.

Grundsätzlich ist es nicht erforderlich, dass die elektrisch leitenden Fäden eine Isolierung aufweisen. Bei der weiteren Verarbeitung des erfindungsgemäßen Flächenheizelementes hat es sich aber als vorteilhaft herausgestellt, wenn die elektrisch leitenden Fäden entlang ihrer Außenseite eine Isolierung aufweisen. Diese kann beispielsweise in Form eines dünnen, isolierenden Überzuges aus Lack ausgeführt sein. Durch die Isolation der einzelnen elektrisch leitenden Fäden bietet sich die Möglichkeit, diese näher aneinander in einem Heizband zu verlegen, ohne dass die Gefahr besteht, dass sich diese kontaktieren. Ein Kontaktieren beziehungsweise ein Aneinanderreiben mehrerer elektrisch leitender Fäden ist unerwünscht, da hierbei leitende Brücken entstehen können, die den Widerstand eines Heizbandes beeinflussen können, und damit auch seine Heizwirkung. Außerdem besteht an derartigen Kontaktstellen die erhöhte Gefahr des Durchbrennens der elektrisch leitenden Fäden.

Bei einer isolierten Ausführung der leitenden Fäden ist es nicht notwendig, das Flächenheizelement mit einem Fließ oder ähnlichem Dämm- beziehungsweise Isolationsmaterial zu überziehen, wenn es beispielsweise in einem Sitz eingebaut wird. Dadurch wird zum einen Material, und damit auch Gewicht gespart, zum anderen kann die Wärme, die durch das Flächenheizelement erzeugt wird, besser abgegeben werden und wird nicht durch ein zusätzliches Dämmmaterial abgeschwächt.

Bei einer vorteilhaften Ausführungsform des Heizelements, ist die Maschenweite über die Fläche des Gewebes konstant. Außerdem ist es vorgesehen, dass der Abstand zwischen benachbarten elektrisch leitenden Fäden und/oder zwischen Heizbändern variabel ist. Hierdurch ist es möglich durch die Anzahl von elektrisch leitenden Drähten, die für die Wärmeentwicklung zuständig sind, die Heizwirkung pro Flächeneinheit zu beeinflussen. Ebenso kann die Heizwirkung durch den Abstand der einzelnen Heizbänder untereinander variiert und bestimmt werden.

Eine konstante Maschenweite über die Fläche des Gewebes dient unter anderem dazu, ein Verschieben der elektrisch leitenden Fäden gegeneinander zu erschweren. Hierbei ist beispielsweise eine Maschenöffnung im Bereich von ca. nur 0,1 mm vorgesehen. Dementsprechend werden filigrane Fäden mit einem äußerst kleinen Durchmesser verwendet. Um die Heizwirkung zu bestimmen, kann beispielsweise nur jeder zweite oder dritte Schussfaden ein elektrisch leitender Faden sein. Hierbei ist die Anzahl der nicht leitenden Fäden zwischen den elektrisch leitenden Fäden beliebig variierbar. Um eine besondere hohe Flächenheizwirkung erzielen zu können, können auch nur elektrisch leitende Fäden verwendet werden.

Die Abmessungen der elektrisch leitenden und elektrisch nicht leitenden Drähte haben keinen Einfluss auf die grundlegende Konzeption des erfindungsgemäßen Flächenheizelementes. Sowohl bei der Produktion als auch für die Haltbarkeit im Dauerbetrieb hat es sich aber als vorteilhaft herausgestellt, wenn die elektrisch leitenden Fäden und die nichtelektrisch leitenden Fäden im Wesentlichen denselben Durchmesser aufweisen. Hierdurch kann ein äußerst gleichmäßiges Gewebe hergestellt werden, welches nicht durch unterschiedlich dicke Fäden zusätzlichen Belastungen ausgesetzt wird.

In einer weiteren Ausführungsform liegt der Durchmesser der Fäden insbesondere in einem Bereich zwischen 10 *µ*m bis 100 *µ*m. Besonders bevorzugt ist eine Größe des Durchmessers von 50 *µ*m bis 60 *µ*m, insbesondere um 40 *µ*m. Diese Größenabmessung lässt eine sehr gute Feinheit des entstehenden Gewebes zu, wobei die Drähte ausreichende Festigkeit haben, um mechanischen Belastungen zu widerstehen. Grundsätzlich ist es auch möglich, feinere Fäden zu verwenden, wobei dann eventuell zusätzliche Stabilisierungsfäden zur Aufnahme der mechanischen Belastung eingeführt werden könnten. Durch die verwendeten feinen Fäden wird die extrem hohe Flexibilität des Gewebes erreicht.

Das Material der leitenden Fäden kann aus jedem beliebigen elektrischen leitenden Material aufgebaut sein. Hierbei bieten sich z.B. Metalle, Legierungen, elektrisch leitende Kunststoffe oder Kohlestofffasern an. Besonders vorteilhaft ist die Verwendung von Kupferdrähten als elektrisch leitende Fäden. Vorteilhaft an Kupfer ist unter anderem, dass der spezifische Widerstand eines daraus gefertigten Drahtes sehr konstant über die gesamte Länge ist und auch äußerst genau bestimmt werden kann. Als nicht elektrisch leitende Fäden bieten sich beispielsweise Kunststoffe oder Naturfasern an. Besonders vorteilhaft ist auch die Verwendung von Polymeren, beispielsweise Polyester. Diese weisen bei den hier vorgesehenen sehr geringen Durchmessern eine hohe Festigkeit, sowohl auf mechanische Beanspruchung wie auch auf die durch die elektrisch leitenden Drähte erzeugte Wärme, auf.

Grundsätzlich ist es möglich, die einzelnen elektrisch leitenden Fäden beziehungsweise die Heizbänder durch zusätzliche in das Gewebe eingewebte Leitungsdrähte zu verbinden. Da diese aber als Stromzu- und -ableitungen dienen, sollten sie aber einen größeren Durchmesser als die restlichen im Gewebe verarbeiteten Fäden aufweisen, was die Produktion und die Belastbarkeit des Gewebes beeinflusst. Auch besteht bei der Verwendung von Zu- und Ableitungsdrähten das Problem der Kontaktierung, welches bereits im Stand der Technik aufgezeigt ist.

Besonders bevorzugt ist deshalb die flächige Verbindungseinrichtung mit den Heizbändern, d.h. mit den elektrisch leitenden Fäden durch Druck und Wärme zu verbinden. Hierbei bietet sich beispielsweise so genanntes Thermokompressionsschweißen an, wodurch keine weiteren Materialien für die Verbindung benötigt werden. Eine derartige schweißartige Verbindung der Verbindungseinrichtungen mit den elektrisch leitenden Drähten ist von guter elektrischer Übertragungsfähigkeit und relativ einfach in einem Produktionsprozess zu integrieren. Auch bestehen hierbei eine gute elektrische Übertragungsfähigkeit zwischen den Verbindungseinrichtungen und den elektrisch leitenden Drähten. Grundsätzlich sind aber auch andere Kontaktierungsmethoden möglich, wie beispielsweise Anlöten oder Ankleben mit leitenden Klebemitteln.

Bei der Ausbildung der flächigen Verbindungseinrichtungen hat es sich als vorteilhaft herausgestellt, diese als dünne, leitende Bereiche flexibler Leiterplatten auszubilden. Die leitenden Bereiche könnten beispielsweise aus einem metallischen Werkstoff hergestellt sein, wodurch das Thermokompressionsschweißen vereinfacht wird. Grundsätzlich ist aber auch jedes andere elektrisch leitende Material dafür geeignet. Als dünne flexible Leiterplatten bietet sich zum Beispiel Flexprint an. Dieses besteht aus einer kunststoffartigen Trägerschicht, die eine leitende Beschichtung aufweist. Zum Definieren einzelner leitender Bereiche kann das leitende Material an bestimmten Stellen weggeätzt werden. Es ist aber auch möglich, nur einzelne separate leitende Plättchen zu verwenden. Durch die Positionierung der leitenden Bereiche der Leiterplatten können gezielt einzelne Heizbänder miteinander verschaltet werden. Zusätzlich kann über diesen dünnen Leiterplatten ein Abdeckund/oder Isolationsband, beispielsweise adhesiv, angebracht werden. Dieses dient zur mechanischen Stabilisierung und zum Schutz der Kontaktierungspunkte zwischen den dünnen Leiterplatten bzw. deren leitenden Bereichen und den elektrisch leitenden Drähten. Das Abdeckband kann z.B. aus Kunststoff in Art einer Kunststofffolie, gefertigt sein. Dieses Band kann zur Vereinfachung der Befestigung selbstklebend ausgelegt werden.

Die flächigen Verbindungseinrichtungen können beispielsweise auch in Form eines dünnen Metallbandes vorgesehen sein, welches jeweils unterbrochen wird, um eine Leiterplatte auszubilden.

In der Beschreibung wurde bis jetzt von Fäden gesprochen. Diese Fäden, die in Schuss- und Kettrichtung eingefügt sind, können sowohl Mono- wie auch Multifilamentfäden sein. In einer bevorzugten Ausführungsform werden Monofilamentfäden insbesondere für die elektrisch leitenden Fäden verwendet, da hierdurch der Durchmesser der Fäden besonders gut bestimmt werden kann und damit der von ihnen dargestellte Widerstand genauer feststellbar ist.

In einer besonders vorteilhaften Ausführungsform wird das Flächenheizelement dazu verwendet, eine Sitzheizung beispielsweise in einem KFZ auszubilden. Im Vergleich zu den Sitzheizungen, wie sie im Stand der Technik verwendet werden, weist das Flächenheizelement ein weitaus geringeres Gewicht auf, und ist durch seine hohe Flexibilität und Reißfestigkeit besonders einfach zu verarbeiten. Auch ist es mit dem erfindungsgemäßen Flächenheizelement besonders einfach möglich, unterschiedliche Flächenheizwirkungen beliebig einzustellen und zu erzielen.

Überraschenderweise hat sich herausgestellt, dass bei gleichem Energieaufwand ein erfindungsgemäßes Flächenheizelement die gewünschte Wärme bereits nach ca. 45 Sekunden erreicht, während herkömmliche Sitzheizungen dazu mindestens 3 Minuten benötigen. Dies ist unter anderem auf die bessere Verteilung der Wärme erzeugenden Fasern über die gesamte Gewebefläche zurückzuführen. Die gute und exakte Platzierung der elektrisch leitenden Fäden ermöglicht auch ein sehr genaues Bestimmen des Ortes der Heizwirkung und eine besondere Gleichmäßigkeit der Erwärmung. Auch das Wegfallen von zusätzlichem Isolationsgewebe, spielt hierbei eine Rolle.

Durch das extrem leichte und flexible Flächenheizelement wird außerdem das Grundgewicht einer Sitzheizung verringert. Die von dem erfindungsgemäßen Flächenheizelement erzeugte Leistung kann in einer Größenordnung von bis zu 100 kW/kg liegen, dies ist um Größenordnungen besser, als bei bekannten Sitzheizungen.

Ein erfindungsgemäßes Verfahren zum Herstellen eines Flächenheizelementes ist dadurch gekennzeichnet, dass mindestens zwei Heizbänder gebildet werden, welche jeweils aus einer Gruppe von zueinander beabstandet verlaufend elektrisch leitende Fäden zusammengefasst werden. Außerdem werden die elektrisch leitenden Fäden jeder Gruppe in einem Anfangs- und einem Endbereich durch eine flächige Verbindungseinrichtung elektrisch leitend verbunden und die Heizbänder werden über die Verbindungseinrichtungen miteinander elektrisch verschaltet.

Ein Grundgedanke des erfindungsgemäßen Verfahrens ist es, die Ausfallsicherheit eines Flächenheizelementes zu verbessern, da mehrere nebeneinander liegende elektrisch leitende Fäden zu Heizbändern zusammengefasst werden. So können einzelne elektrisch leitende Fäden ausfallen, ohne dass das Gesamtsystem wesentlich beeinflusst wird.

Ein weiterer Grundgedanke kann darin gesehen werden, dass durch die Verwendung von externen Verbindungseinrichtungen zum einen eine besonders gute Kontaktierung der einzelnen leitenden Fäden ermöglicht ist. Zum anderen ist es durch die Verbindungseinrichtungen möglich, die einzelnen Heizbänder beliebig miteinander zu verschalten. So kann durch gezielte Parallel, Reihen- oder sonstige Kombinationsschaltungen der Gesamtwiderstand des Flächenheizelementes, und somit auch die Wärmewirkung bewusst beeinflusst wird.

Bei der Herstellung des Flächenheizelementes ist es besonders vorteilhaft, wenn die elektrisch leitenden Fäden entlang ihrer Außenseite eine elektrische Isolation aufweisen. Diese Isolation wird im Bereich der Verbindungseinrichtungen beim Aufbringen dieser entfernt, so dass es zu einer guten elektrischen Übertragung zwischen der Verbindungseinrichtung und den elektrisch leitenden Fäden kommen kann. Grundsätzlich ist eine derartige Isolation aber nicht zwingend erforderlich. Die Isolation bietet den Vorteil, dass die elektrisch leitenden Drähte gegeneinander isoliert sind, wodurch ungewolltes Kontaktieren der Drähte untereinander, mit den entsprechenden Fließbeziehungsweise Kriechströme verhindert, beziehungsweise im großen Maß minimiert wird. Hierdurch wird ein ungewolltes Durchbrennen der Drähte durch große Hitze weitgehend vermieden.

Das Anbringen der flächigen Verbindungseinrichtungen auf den elektrisch leitenden Fäden ist grundsätzlich mit jeder beliebigen Methode durchführbar, solange eine elektrisch leitende Kontaktierung erreicht wird. Besonders vorteilhaft hat es sich aber herausgestellt, wenn diese Verbindung durch Anwendung von Druck und Wärme ausgeführt wird, so dass die flächigen Verbindungseinrichtungen an den Fäden angeschweißt werden. Bei diesem Verfahrensschritt ist es vorgesehen, dass eine eventuell vorhandene Isolation der Fäden im Bereich der Kontaktstelle entfernt wird. Dies kann beispielsweise durch die zum Schweißen verwendete Hitze erfolgen, so dass die Isolation verdampft beziehungsweise sich zersetzt. Grundsätzlich ist aber auch ein vorheriges Entfernen der Isolation, beispielsweise durch entsprechende Säuren oder mechanische Hilfsmittel möglich und die Kontaktierung der elektrisch leitenden Fäden kann durch Verlöten und Verkleben erreicht werden.

In einer weiteren vorteilhaften Ausführung ist es vorgesehen, dass die flächigen Verbindungseinrichtungen beabstandet voneinander entlang eines Bandes angebracht werden und dass dieses Band mit den flächigen Verbindungen auf das Gewebe aufgebracht wird, wobei das Band auf der vom Gewebe abgewandten Seite der flächigen Verbindungseinrichtungen liegt. Dies kann beispielsweise in Form einer dünnen flexible Leiterplatte, wie Flexprint, erfolgen. Hierbei ist ein dünner leitender Film auf einem Trägermaterial aufgebracht. Zur Bestimmung von leitenden Bereichen wird ein Teil des leitenden Films entfernt. Mit der zusätzlichen Verwendung eines Abdeckbandes, welches beispielsweise adhesiv auf dem Gewebe angebracht werden kann, ist es möglich, die flächigen Verbindungseinrichtungen selbst und eventuell auch die gesamte dünne, flexible Leiterplatte zu schützen und die mechanische Stabilität des Flächenheizelementes im Bereich der Kontaktstellen zu erhöhen.

Außerdem wird ein Verschieben der elektrisch leitenden Drähte an den flächigen Verbindungseinrichtungen verhindert und die elektrisch leitende Verbindung zwischen Verbindungseinrichtung und elektrisch leitendem Faden unterstützt. Besonders vorteilhaft ist es, wenn die flächigen Verbindungseinrichtungen auf einem Band aufgebracht werden, beispielsweise auf Flexprint und mit einem Ätzverfahren leitende Bereiche definiert werden. Anschließend kann die Verbindung der flächigen Verbindungseinrichtung durch Thermokompressionsschweißen mit den elektrisch leitenden Fäden durchgeführt werden. Danach oder zuvor wird ein Abdeckband auf das vorbereitete Gewebe aufgelegt und beispielsweise adhesiv befestigt.

Hierbei bietet sich auch die Möglichkeit an, die flächige Verbindungseinrichtung in der gewünschten Größe zu konditionieren und eine gewünschte Verschaltung der verschiedenen Heizbänder untereinander auszuführen.

Zur Bestimmung der Heizwirkung des entstehenden Flächenheizelementes sind verschiedene Verfahren möglich. Beispielsweise können elektrisch leitende Fäden mit unterschiedlichem spezifischem Widerstand verwendet werden, um damit die Heizwirkung zu beeinflussen. Ebenfalls ist es möglich, den Durchmesser der elektrisch leitenden Fäden zu variieren, um damit wiederum den Widerstand und so die Wärmeentwicklung zu beeinflussen. Ein anderes bevorzugtes Verfahren besteht darin, den Abstand benachbarter elektrisch leitender Fäden zu variieren. So kann durch ein Vorsehen von mehreren elektrisch leitenden Fäden direkte nebeneinander eine hohe Flächenheizwirkung erzielt werden, während, wenn zwischen mehreren benachbarten elektrisch leitenden Fäden eine Anzahl von nicht elektrisch leitenden Fäden vorgesehen ist, die Flächenheizwirkung verringert werden kann.

Es ist aber auch möglich, elektrisch leitende, isolierende Fäden sich kreuzend, beispielsweise in Schuss- und in Kettrichtung einzusetzen. Eine Verschaltung wurde hierbei wie beschrieben ausgeführt, nur dass zwei separate Heizelemente entstehen würden, welche einzeln angesteuert werden können. Es würde somit ein Heizelement in Schuss- und ein zweites unabhängiges in Kettrichtung bereitgestellt, da zwischen Schussund Kettfäden keine Verbindung besteht.

Die Erfindung wird weiter anhand von bevorzugten Ausführungsbeispielen erläutert, welche schematisch in den Zeichnungen dargestellt sind. In den Zeichnungen zeigen:
- Fig. 1: eine Ansicht eines stark vereinfachtes Strukturbeispiel eines erfindungsgemäßen Flächenheizelementes; und
- Fig. 2: eine Ansicht eines vereinfachtes erfindungsgemäßes Flächenheizelement zum Einbau für eine Sitzheizung.

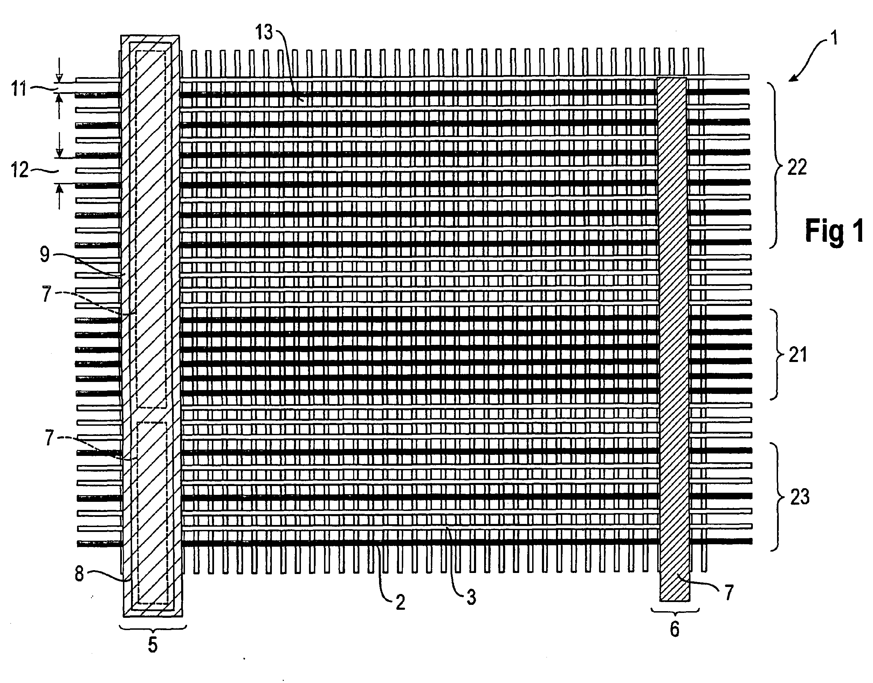

In Fig. 1 ist ein stark vereinfachtes Strukturbeispiel eines erfindungsgemäßen Flächenheizelementes 1 dargestellt. Das Flächenheizelement 1 weist ein Gewebe auf, welches in dem hier gezeigten Ausführungsbeispiel aus Schuss- und Kettfäden gebildet ist. Hierbei werden elektrisch leitende Fäden 2 und elektrisch nicht leitende Fäden 3 verwendet. In der hier gezeigten Ausführungsform sind die elektrisch leitenden Fäden 2 nur in Schussrichtung eingesetzt. Ebenso ist es möglich, elektrisch leitende Fäden nur in Kettrichtung oder sowohl in Schuss- als auch in Kettrichtung vorzusehen.

In dem hier dargestellten Gewebeausschnitt sind drei verschiedene Arten von Heizbändern 4 exemplarisch dargestellt. Das Heizband I 21, hat die höchste Flächenheizwirkung verglichen mit den anderen beiden Heizbändern II 22 und III 23. Im Heizband I 21, sind die elektrisch leitenden Fäden 2 direkt benachbart voneinander angebracht, so dass sie in im Wesentlichen parallel zueinander verlaufen.

Im Vergleich dazu ist im Heizband II 22, jeweils ein nicht elektrisch leitender Faden 3 zwischen einem elektrisch leitenden Faden 2 vorgesehen. Hierdurch wird die Heizwirkung auf die Fläche bezogen im Vergleich zu Heizband 1 21, verringert. Die Flächenheizwirkung des Heizbandes III 23, ist durch das Einfügen von weiteren elektrisch nicht leitenden Fäden 3 zwischen den elektrisch leitenden Fäden 2 noch weiter verringert. Grundsätzlich können auch mehr nicht elektrisch leitende Fäden 3 als in Fig. 1 dargestellt zwischen den elektrisch leitenden Fäden 2 eingebracht werden, um die Flächenheizwirkung eines Heizbandes 4 weiter zu verringern.

Die einzelnen elektrisch leitenden Fäden 2 eines Heizbandes 4 sind durch eine flächige Verbindungseinrichtung 7 miteinander verbunden. Diese flächige Verbindungseinrichtung 7 dient ebenso dazu, einzelne Heizbänder miteinander in einer gewünschten Weise zu verschalten. Im Endbereich 6 des Gewebes 13 ist eine flächige Verbindungseinrichtung 7 ohne Abdeckband 9 und ohne Leiterplatte 8 dargestellt. Die flächige Verbindungseinrichtung 7 kann in Form einer dünnen Platte beispielsweise als dünne Kupferplatte ausgebildet sein.

Im Anfangsbereich 5 werden die Verbindungselemente 7 bzw. die Leiterplatten 8 durch das Abdeckband 9 verdeckt. Die flächigen Verbindungseinrichtungen 7 sind auf einer Leiterplatte 8 ausgebildet. Die Lage der Leiterplatten 8 ist durch die durchgezogene Linie und die der flächigen Verbindungseinrichtung 7 durch die gestrichelten Umrisse verdeutlicht. Das Abdeckband 9 kann beispielsweise adhesiv auf die bereits angebrachte Leiterplatte 8 auf das Gewebe 13 aufgebracht werden. Ebenso ist es aber auch möglich, die Leiterplatte 8 erst auf das Abdeckband 9 aufzubringen und dann das Abdeckband 9 mit den Leiterplatten 8 und den Verbindungseinrichtungen 7 auf dem Gewebe 13 zu befestigen. Das Abdeckband 9 kann beispielsweise zusätzlich als Isolation der Leiterplatten 8 dienen. Die Leiterplatte 8 ist aber nicht zwingend erforderlich.

Die Befestigung der Verbindungseinrichtungen 7 an dem Gewebe 13, insbesondere den elektrisch leitenden Fäden 2, kann durch Thermokompressionsschweißen ausgeführt werden. Bei dieser Art von Verbindung wird durch Druck und Wärme eine elektrisch leitende Verbindung zwischen den elektrisch leitenden Fäden 2 und den Verbindungseinrichtungen 7, die als leitende Bereiche der Leiterplatten 8 ausgebildet sind, hergestellt. Das Ergebnis ist eine "Mikro"-Verschweißung eines leitenden Fadens 2 mit den leitenden Bereichen.

Sind die elektrisch leitenden Fäden 2 mit einer isolierenden Schicht ummantelt, so kann diese Schicht während des Thermokompressionsschweißens beispielsweise durch die Hitzewirkung entfernt werden. Die Isolation der elektrisch leitenden Fäden 2 kann zum einem dem Schutz vor einer ungewollten Kontaktierung der Fäden untereinander, zum anderen auch zur Vereinfachung des Einbaus eines erfindungsgemäßen Flächenheizelementes in beispielsweise eine Sitzheizung dienen, da eine zusätzliche Isolierung, wie spezielle Isolationsgewebelage, nicht mehr notwendig ist.

Der in Fig. 1 dargestellte Ausschnitt eines erfindungsgemäßen Flächenheizelementes 1 ist eine stark vergrößerte Darstellung. So ist bei einem Durchmesser der Fäden 2, 3 in einer Größenordnung um 40 *µ*m, eine Maschenöffnung 11 von ca. 0,1 mm vorgesehen. Ein derartiges Flächenheizelement weist zwischen 10 und 200 Fäden pro Zentimeter, bevorzugt zwischen 150 und 60, insbesondere ca. 70 Fäden pro Zentimeter auf.

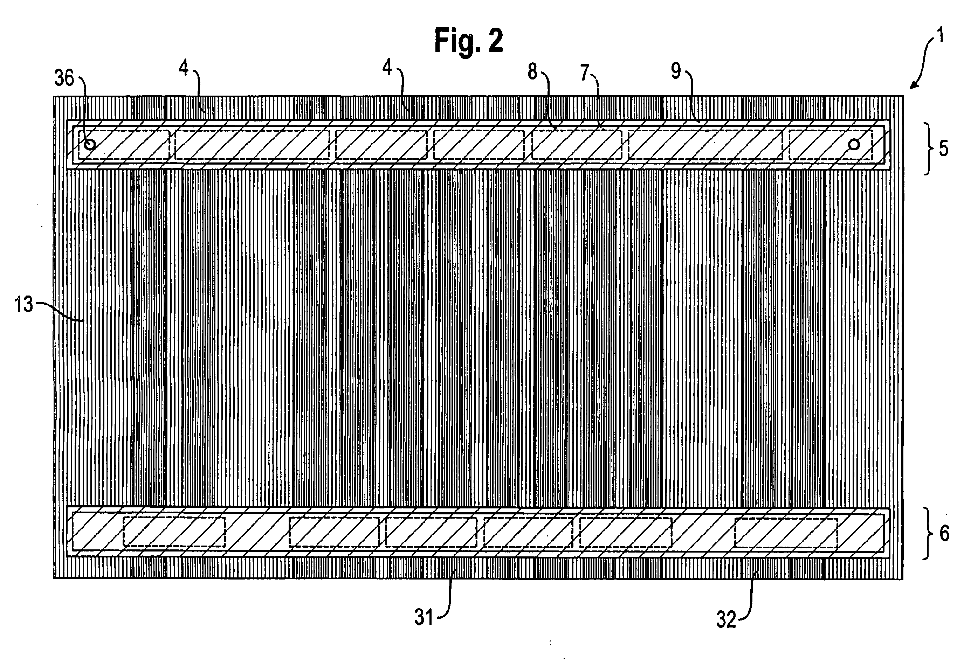

In Fig. 2 ist ein vereinfachtes erfindungsgemäßes Flächenheizelement 1 dargestellt, welches zum Einbau in einen KFZ-Sitz vorgesehen ist. Das Flächenheizelement 1 weist zwei verschiedene Heizbänder A 31 und B 32 auf. Beide Heizbänder 31, 32 weisen eine unterschiedliche Flächenheizwirkung, durch unterschiedliche dicht nebeneinander verlegte elektrisch leitende Fäden 2 auf. Die Dichte und Anzahl der Fäden 2, 3, aus denen das Gewebe 13 besteht, bewegt sich für das hier abgebildete Flächenheizelement 1 für einen KFZ-Sitz im Rahmen von 3000 bis 4000 Fäden, wobei die totale Länge des Flächenheizelementes 1 nur im Bereich zwischen 40 bis 50 cm ist. In einem Heizband A 31 sind z.B. ca. 110 Fäden vorgesehen.

Zwischen den einzelnen Heizbändern 31, 32 sind jeweils Bereiche ohne elektrisch leitende Fäden 2 vorhanden. Diese Bereiche dienen zum einen zum besseren Abgrenzen der Heizbänder 4 untereinander, zum anderen sind sie für Stellen vorgesehen, in denen beispielsweise die Polsterung befestigt ist. Dies ist bei Vertiefungen in der Polsterung der Fall, die nicht erhitzt werden sollen, um eine unnötige Energieverschwendung und Überhitzung zu verhindern.

In dem hier dargestellten Flächenheizelement 1 sind die einzelnen Heizbänder 4 in Serie miteinander verschaltet. Die einzelnen Verbindungseinrichtungen 7 der Leiterplatten 8 sind wiederum durch gestrichelte Linien angedeutet. Die Leiterplatte 8 selbst ist als durchgezogene Linie dargestellt. Am oberen Abdeckband 9 ist am Anfang und Ende jeweils ein Anschlusspunkt 36 zum Anschluss an die Energieversorgung vorgesehen. Das hier skizzenhaft dargestellte Flächenheizelement 1 ist zum Anschluss an eine KFZ-Bordversorgung, vorzugsweise im Bereich von 12 V, ausgelegt. Durch die flexible Möglichkeit der Dimensionierung der einzelnen Heizbänder 4 selbst, sowie die Verschaltung der einzelnen Heizbänder 4 untereinander ist aber auch eine Anpassung an andere Spannungen sehr einfach möglich.

Das erfindungsgemäße Flächenheizelement ist aber auch für andere Verwendungszwecke als eine Sitzheizung geeignet. So ist denkbar, die Flächenheizelemente in Kleidung vorzusehen, um diese zu erwärmen. Auch ist es möglich, das erfindungsgemäße Flächenheizelement beispielsweise in Skischuhen einzubauen, um diese vor der Benutzung auf eine angenehme Temperatur zu erwärmen.

Das erfindungsgemäße Flächenheizelement ermöglicht ein einfaches flexibles und äußerst effektives Einsetzen von Flächenelementen, beispielsweise für Sitzheizungen.

## Patentansprüche

1. Flächenheizelement (1)
mit einem Gewebe (13), welches Fäden (2, 3) in Schuss- und Kettrichtung aufweist,
in welchem mindestens ein Teil der Fäden als elektrisch leitende Fäden (2) ausgeführt sind,
wobei mindestens zwei Heizbänder (4) vorgesehen sind, welche jeweils aus einer Gruppe von zueinander beabstandet verlaufenden, elektrisch leitenden Fäden (2) zusammengefasst sind,
wobei die elektrisch leitenden Fäden (2) jeder Gruppe in einem Anfangs (5)- und einem Endbereich (6) durch eine Verbindungseinrichtung (7) elektrisch verbunden sind und
die Heizbänder (4) über die Verbindungseinrichtungen (7) miteinander elektrisch verschaltet sind,
**dadurch gekennzeichnet,**
**dass** die Verbindungseinrichtungen (7) als flächige dünne Platten ausgeführt sind,
**dass** die flächigen dünnen Platten beabstandet voneinander entlang eines Bandes angeordnet sind und
**dass** die flächigen dünnen Platten auf das Gewebe (13) aufgebracht und mit den elektrisch leitenden Fäden (2) elektrisch verbunden sind.

2. Flächenheizelement nach Anspruch 1,
**dadurch gekennzeichnet,**
**dass** die elektrisch leitenden Fäden (2) entlang ihrer Außenseite eine Isolation aufweisen.

3. Flächenheizelement nach Anspruch 1 oder 2,
**dadurch gekennzeichnet,**
**dass** die Maschenweite (11) über die Fläche des Gewebes (13) konstant ist und
**dass** der Abstand (12) zwischen benachbarten elektrisch leitenden Fäden (2) und/oder Heizbändern (4) zur Beeinflussung der Heizwirkung variiert ist.

4. Flächenheizelement nach einem der Ansprüche 1 bis 3,
**dadurch gekennzeichnet,**
**dass** die elektrisch leitenden Fäden (2) im Wesentlichen den gleichen Durchmesser wie die nicht elektrisch leitenden Fäden (3) im Gewebe (13) aufweisen, wobei der Durchmesser der Fäden (2, 3) insbesondere in einem Bereich zwischen 10 um bis 100 µm, vorzugsweise 40 µm bis 50 µm beträgt.

5. Flächenheizelement nach einem der Ansprüche 1 bis 4,
**dadurch gekennzeichnet,**
**dass** die elektrisch leitenden Fäden (2) als Kupferdrähte ausgeführt sind, und
**dass** die nicht-elektrisch leitenden Fäden (3) aus einem Polymer, insbesondere Polyester, ausgebildet sind.

6. Flächenheizelement nach einem der Ansprüche 1 bis 5,
**dadurch gekennzeichnet,**
**dass** die flächigen Verbindungseinrichtungen (7) mit den Heizbändern (4) mittels Druck und Wärme verbunden, insbesondere verschweißt, sind.

7. Flächenheizelement nach einem der Ansprüche bis 6,
**dadurch gekennzeichnet,**
**dass** die flächigen Verbindungseinrichtungen (7) entlang des Bandes als eine flexible Leiterplatte (8) ausgebildet sind.

8. Sitzheizung mit einem Flächenheizelement nach einem der Ansprüche 1 bis 7.

9. Kleidung mit einem Flächenheizelement nach einem der Ansprüche 1 bis 7.

10. Verfahren zur Herstellung eines Flächenheizelements (1), insbesondere nach einem der Ansprüche 1 bis 7,
bei dem ein Gewebe (13) aus Fäden (2, 3) gewebt wird, welche zumindest zum Teil elektrisch leitende Fäden (2) sind,
wobei mindestens zwei Heizbänder (4) gebildet werden, welche jeweils aus einer Gruppe von zueinander beabstandet verlaufenden, elektrisch leitenden Fäden (2) zusammengefasst werden,
wobei die elektrisch leitenden Fäden (2) jeder Gruppe in einem Anfangs (5)- und Endbereich (6) durch eine Verbindungseinrichtung (7) elektrisch leitend verbunden werden, und
die Heizbänder (4) über die Verbindungseinrichtungen (7) miteinander elektrisch verschaltet werden,
**dadurch gekennzeichnet,**
**dass** zur elektrisch leitenden Verbindung die Verbindungseinrichtungen (7) als flächige dünne Platten ausgebildet werden,
**dass** die flächigen dünnen Platten beabstandet voneinander entlang eines Bandes angeordnet werden und
**dass** das Band mit den flächigen dünnen Platten auf das Gewebe (13) aufgebracht wird, wobei das Band auf der vom Gewebe (13) abgewandten Seite der flächigen Verbindungseinrichtungen (7) liegt.

11. Verfahren nach Anspruch 10,
**dadurch gekennzeichnet,**
**dass** die elektrisch leitenden Fäden (2) entlang ihrer Außenseite eine elektrische Isolation aufweisen, welche im Bereich der flächigen Verbindungseinrichtung (7) entfernt wird.

12. Verfahren nach Anspruch 10 oder 11,
**dadurch gekennzeichnet,**
**dass** die flächige Verbindungseinrichtung (7) auf isolierte, elektrisch leitende Fäden (2) aufgebracht wird und unter Anwendung von Druck und Wärme daran angeschweißt wird, wobei die Isolation der Fäden (2) in diesem Bereich entfernt wird.

13. Verfahren nach einem der Ansprüche 10 bis 12,
**dadurch gekennzeichnet,**
**dass** der Abstand (12) benachbarter elektrisch leitender Fäden (2) zur Einstellung der Heizwirkung variiert wird.

## Claims

1. Surface heating element (1)
comprising a fabric (13) which has threads (2, 3) in weft and warp direction,
wherein at least a part of the threads is designed as electrically conductive threads (2),
wherein at least two heating strips (4) are provided, which are each joined together of a group of electrically conductive threads (2) that extend in a mutually spaced manner,
the electrically conductive threads (2) of each group are electrically connected at a starting portion (5) and an end portion (6) through connecting means (7) and
the heating strips (4) are electrically wired to one another via the connecting means (7),
**characterized in that**
the connecting means (7) are designed as planar thin plates,
the planar thin plates are arranged in a mutually spaced manner along a tape, and
the plantar thin plates are arranged on the fabric (13) and electrically connected with the electrically conductive threads (2).

2. Surface heating element according to claim 1,
**characterized in that**
the electrically conductive threads (2) have an insulation along their external surface.

3. Surface heating element according to claim 1 or 2,
**characterized in that**
the mesh width (11) is constant across the surface of the fabric (13) and
the distance (12) between adjacent electrically conductive threads (2) and/or heating strips (4) is varied in order to influence the heating effect.

4. Surface heating element according to any one of claims 1 to 3,
**characterized in that**
in the fabric (13) the electrically conductive threads (2) substantially have the same diameter as the electrically non-conductive threads (3), the diameter of the threads (2, 3) lying in particular in a range between 10 µm and 100 µm, preferably between 40 µm and 50 µm.

5. Surface heating element according to any one of claims 1 to 4,
**characterized in that**
the electrically conductive threads (2) are designed as copper wires and
the electrically non-conductive threads (3) are designed of a polymer, in particular polyester.

6. Surface heating element according to any one of claims 1 to 5,
**characterized in that**
the planar connecting means (7) are connected with the heating strips (4) through compression and heat, in particular by being welded on.

7. Surface heating element according to any one of claims 1 to 6,
**characterized in that**
the planar connecting means (7) along the tape are designed as a flexible printed circuit board (8).

8. Seat heating comprising a surface heating element according to any one of claims 1 to 7.

9. Clothes comprising a surface heating element according to any one of claims 1 to 7.

10. Method for producing a surface heating element (1), in particular according to any one of claims 1 to 7,
in which a fabric (13) is woven consisting of threads (2, 3), which are, at least in part, electrically conductive threads (2),
in which at least two heating strips (4) are formed, which are each joined together of a group of electrically conductive threads (2) that extend in a mutually spaced manner,
in that the electrically conductive threads (2) of each group are connected in an electrically conductive manner at a starting portion (5) and an end portion (6) through a connecting means (7) and
in that the heating strips (4) are electrically wired to one another via the connecting means (7)
**characterized in that**
for an electrically conductive connection the connecting means (7) are designed as planar thin plates, the planar thin plates are arranged in a mutually spaced manner along a tape and
the tape with the planar thin plates is applied to the fabric (13), the tape lying on the side of the planar connecting means (7) facing away from the fabric (13).

11. Method according to claim 10,
**characterized in that**
the electrically conductive threads (2) have an electric insulation along their external surface, which is removed in the portion of the planar connecting means (7).

12. Method according to claim 10 or 11,
**characterized in that**
the planar connecting means (7) is applied to insulated, electrically conductive threads (2) and is welded thereto through the application of compression and heat, whereby the insulation of the threads (2) is removed in this portion.

13. Method according to any one of claims 10 to 12,
**characterized in that**
the distance (12) between adjacent electrically conductive threads (2) is varied to adjust the heating effect.

## Revendications

1. Élément chauffant surfacique (1)
avec un tissu (13) qui comprend des fils (2, 3) dans le sens de trame et le sens de chaîne,
dans lequel au moins une partie des fils est conformée en fils conducteurs électriques (2),
au moins deux bandes chauffantes (4) étant prévues, qui sont composées chacune d'un groupe de fils conducteurs électriques (2) s'étendant à distance les uns des autres,
les fils conducteurs électriques (2) de chaque groupe étant reliés électriquement dans une zone de début (5) et une zone de fin (6) par un dispositif de jonction (7), et
les bandes chauffantes (4) étant interconnectées électriquement les unes aux autres par l'intermédiaire des dispositifs de jonction (7),
***caractérisé***
***en ce que*** les dispositifs de jonction (7) sont conformés en plaques plates minces,
***en ce que*** les plaques plates minces sont disposées à distance les unes des autres le long d'une bande, et
***en ce que*** les plaques plates minces sont appliquées sur le tissu (13) et reliées électriquement aux fils conducteurs électriques (2).

2. Élément chauffant surfacique selon la revendication 1,
***caractérisé en ce que*** les fils conducteurs électriques (2) comportent une isolation le long de leur face extérieure.

3. Élément chauffant surfacique selon la revendication 1 ou 2,
***caractérisé***
***en ce que*** la taille des mailles (11) est constante sur la surface du tissu (13) et
***en ce que*** la distance (12) entre des fils conducteurs électriques (2) voisins et/ou des bandes chauffantes (4) voisines est modifiée pour influencer l'effet thermique.

4. Élément chauffant surfacique selon l'une quelconque des revendications 1 à 3,
***caractérisé en ce que*** les fils conducteurs électriques (2) présentent pour l'essentiel le même diamètre que les fils (3) non conducteurs électriques dans le tissu (13), le diamètre des fils (2, 3) étant compris en particulier entre 10 µm et 100 µm, de manière préférée entre 40 µm et 50 µm.

5. Élément chauffant surfacique selon l'une quelconque des revendications 1 à 4,
***caractérisé***
***en ce que*** les fils conducteurs électriques (2) sont conformés en fils de cuivre, et
***en ce que*** les fils (3) non conducteurs électriques sont constitués d'un polymère, en particulier du polyester.

6. Élément chauffant surfacique selon l'une quelconque des revendications 1 à 5,
***caractérisé en ce que*** les dispositifs de jonction plats (7) sont reliés aux bandes chauffantes (4) par pression et chaleur, en particulier par soudage.

7. Élément chauffant surfacique selon l'une quelconque des revendications 1 à 6,
***caractérisé en ce que*** les dispositifs de jonction plats (7) sont conformés en plaque conductrice flexible (8) le long de la bande.

8. Chauffage de siège avec un élément chauffant surfacique selon l'une quelconque des revendications 1 à 7.

9. Vêtement avec un élément chauffant surfacique selon l'une quelconque des revendications 1 à 7.

10. Procédé de fabrication d'un élément chauffant surfacique (1), en particulier selon l'une quelconque des revendications 1 à 7,
dans lequel un tissu (13) est tissé à partir de fils (2, 3) qui sont au moins en partie des fils conducteurs électriques (2),
au moins deux bandes chauffantes (4) étant prévues, qui sont composées chacune d'un groupe de fils conducteurs électriques (2) s'étendant à distance les uns des autres,
les fils conducteurs électriques (2) de chaque groupe étant reliés en conduction électrique dans une zone de début (5) et une zone de fin (6) par un dispositif de jonction (7), et
les bandes chauffantes (4) étant interconnectées électriquement les unes aux autres par l'intermédiaire des dispositifs de jonction (7),
***caractérisé***
***en ce que****,* pour la liaison conductrice électrique, les dispositifs de jonction (7) sont conformés en plaque plate mince,
***en ce que*** les plaques plates minces sont disposées à distance les unes des autres le long d'une bande, et
***en ce que*** la bande est appliquée sur le tissu (113) avec les plaques plates minces, la bande se trouvant du côté des dispositifs de jonction plats (7) opposé au tissu (13).

11. Procédé selon la revendication 10, ***caractérisé en ce que*** les fils conducteurs électriques (2) comportent, le long de leur face extérieure, une isolation électrique qui est retirée au niveau du dispositif de jonction plat (7).

12. Procédé selon la revendication 10 ou 11, ***caractérisé en ce que*** le dispositif de jonction plat (7) est appliqué sur des fils conducteurs électriques (2) isolés et est soudé à eux par application de pression et de chaleur, l'isolation des fils (2) étant retirée dans cette zone.

13. Procédé selon l'une quelconque des revendications 10 à 12, ***caractérisé en ce que*** la distance (12) entre fils conducteurs électriques (2) voisins est modifiée pour ajuster l'effet thermique.
